(19) Europäisches Patentamt
European Patent Office
Office européen des brevets

(11) Veröffentlichungsnummer : **0 095 588**
**B1**

(12) # EUROPÄISCHE PATENTSCHRIFT

(45) Veröffentlichungstag der Patentschrift : **21.01.87**

(51) Int. Cl.$^4$ : **C 08 C 19/00**, C 09 J 3/16

(21) Anmeldenummer : **83104335.1**

(22) Anmeldetag : **03.05.83**

(54) **Organosiliciummodifizierte Polydiene, Verfahren zu ihrer Herstellung und deren Verwendung als Modifizierungsmittel für Beschichtungsmassen.**

(30) Priorität : **18.05.82 DE 3218675**

(43) Veröffentlichungstag der Anmeldung : **07.12.83 Patentblatt 83/49**

(45) Bekanntmachung des Hinweises auf die Patenterteilung : **21.01.87 Patentblatt 87/04**

(84) Benannte Vertragsstaaten : **BE DE FR GB IT NL**

(56) Entgegenhaltungen :
**DE-A- 2 321 557**
**FR-A- 2 384 796**

(73) Patentinhaber : **Th. Goldschmidt AG**
**Goldschmidtstrasse 100 Postfach 101461**
**D-4300 Essen 1 (DE)**

(72) Erfinder : **Weitemeyer, Christian, Dr.**
**Schellstrasse 50**
**D-4300 Essen (DE)**

**EP 0 095 588 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Organosiliciummodifizierte Polydiene der allgemeinen Formel

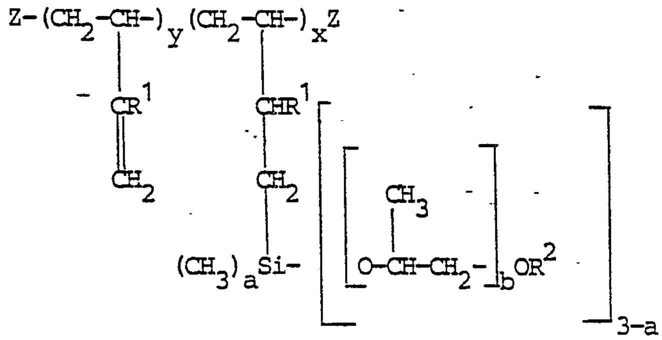

worin Z kettenbegrenzende Gruppen bedeutet,

$R^1$ im polymeren Molekül gleich oder verschieden ist und einen Wasserstoff- oder Methylrest bedeutet,

$R^2$ im polymeren Molekül gleich oder verschieden ist und einen, gegebenenfalls fluorierten, Alkyl- oder Alkylarylrest mit 6 bis 18 Kohlenstoffatomen oder den Rest

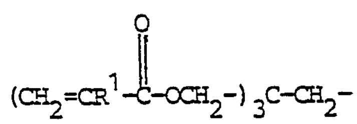

jedoch mindestens 80 % der Reste $R^2$ Alkyl- oder Alkylarylreste sind, bedeutet,

$x \geq 3$ und

$y \geq 1$ ist, beide Indices jedoch so groß sind, daß das Molgewicht des gerüstbildenden Polydiens 300 bis 200 000 ist,

$a = 0$ bis 2

$b = 0$ oder 1 ist,

und wobei die Polydiene ggf. weniger als 20 Mol% der Einheiten $—CH_2—CR^1=CH—CH_2—$ enthalten.

Die Erfindung betrifft ferner die Herstellung und Verwendung solcher Verbindungen als reaktive Modifizierungsmittel für abhäsive Beschichtungsmassen auf der Basis von polymeren Siliconverbindungen, welche Reste mit olefinischen Doppelbindungen oder Hydrogensilylreste aufweisen.

Es ist bekannt, Substrate, wie z. B. Papier, mit polymeren, siliciumorganischen Verbindungen zu beschichten, um den Substraten abhäsive Eigenschaften zu verleihen. Als polymere, siliciumorganische Verbindungen kann man z. B. Organosiloxane verwenden; welche mit Acrylsäureestern oder Methacrylsäureestern modifiziert sind. Die Herstellung solcher Siloxane ist z. B. in der DE-PS 27 47 233 beschrieben.

Aus der DE-OS 29 48 708 ist ein Verfahren zur Herstellung von Organopolysiloxanen, die als Wirkstoffe für abhäsive Beschichtungsmassen für flächige Träger, insbesondere Papier oder Kunststofrolien geeignet sind, durch Umsetzung von Organopolysiloxanen, welche SiCl-Gruppen aufweisen, mit Pentaerythrittriacrylat oder Pentaerythrittrimethacrylat, gegebenenfalls unter Zusatz von HCl-bindenden Neutralisationsmitteln, bekannt, welches dadurch gekennzeichnet ist, daß man

a) als Organopolysiloxane solche der Formel

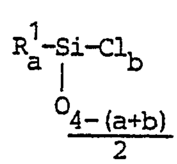

verwendet, in der $R^1$ eine Alkylgruppe mit 1 bis 4 Kohlenstoffatomen, eine Vinyl- und/oder eine Phenylgruppe ist, mit der Maßgabe, daß mindestens 90 Mol-% der Gruppen $R^1$ Methylgruppen sind, a einen Wert von 1,8 bis 2,2 und b einen Wert von 0,004 bis 0,5 hat und

b) die Umsetzung mit mindestens äquimolaren Mengen Pentaerythrittriacrylat oder Pentaerythrittrimethacrylat durchführt und

c) das Verfahrensprodukt von in diesem suspendierten festen Bestandteilen in an sich bekannter Weise abtrennt.

In der vorgenannten DE-OS ist bereits angegeben, daß es möglich ist, die so erhaltenen Beschichtungsmassen noch durch Zusatz weiterer Produkte zu modifizieren. Derartige Modifizierungsmittel seien Z. B. Siloxane mit Gruppen, welche bei der Aushärtung der Beschichtungsmassen in diese chemisch eingebaut werden. Besonders geeignete Modifizierungsmittel seien Siloxane mit an Si-Atomen gebundenen Wasserstoffatomen. Hierdurch würde die Viskosität der Beschichtungsmassen erniedrigt und ihre Auftragbarkeit auf flächige Träger verbessert.

Aus der DE-AS 26 02 809 ist ferner die Verwendung von Diorganopolysiloxan-Zusammensetzungen zur Herstellung von aus Papier bestehenden Substraten mit Abzieheigenschaften bekannt. Die Mischpolymeren entsprechen dabei der allgemeinen Formel

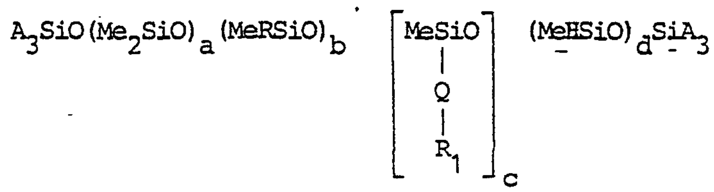

wobei insbesondere von Bedeutung ist, daß Q ein Sauerstoff- oder Schwefelrest und $R_1$ ein Rest mit nicht weniger als 6 Kohlenstoffatomen ist. Diese Modifizierungsmittel verbessern die abhäsiven Eigenschaften von Beschichtungsmassen auf Siliconbasis.

Die Handhabung dieser in der DE-AS 26 02 809 beschriebenen Substanzen ist wegen der Wasserstoffentwicklung bei der Herstellung und anschließenden Lagerung mit Risiken behaftet. In besonderem Maße trifft dies zu, wenn restliche SiH-Bindungen im Molekül belassen werden. Andererseits kommt es bei klebstoffabweisenden Siliconbeschichtungen meist darauf an, das klebrige Gut nicht in seiner Klebkraft zu beeinträchtigen, wenn es nach seiner Entfernung vom beschichteten Substrat benutzt werden soll. Ein typisches Beispiel sind beschichtete Papiere, auf welche Klebeetiketten aufgebracht sind, die sich von der Unterlage ablösen lassen und ohne Beeinträchtigung ihrer Klebkraft dann verwendet werden können. Um diesen Zweck zu erreichen, dürfen möglichst keine Anteile der Siliconbeschichtung auf den Kleber übertragen werden. Dazu ist es vorteilhaft, die Zusätze, welche die Eigenschaften des Mischpolymers verbessern, durch chemische Verknüpfung mit diesem zu verbinden.

Der Erfindung liegt somit die Aufgabe zugrunde, ein Modifizierungsmittel für abhäsive Beschichtungsmassen aufzufinden, welches mit der Beschichtungsmasse zu reagieren in der Lage ist und dabei die abhäsiven Eigenschaften der Beschichtung verbessert, ohne die Klebkraft von Produkten zu verschlechtern, die in Berührung mit der abhäsiven Schicht kommen. Ziel der Erfindung sind somit reaktive Modifizierungsmittel zur Verbesserung der abhäsiven Eigenschaften.

Überraschenderweise gelingt die Lösung dieser Aufgabe durch Polymere mit seitenständig gebundenen Si-Einheiten, welche dadurch hergestellt werden können, daß man Silane der allgemeinen Formel

$$(CH_3)_aSiHX_{3-a} \qquad \text{II}$$

wobei X ein Halogen-, Alkoxy- oder Acyloxyrest ist und a die angegebene Bedeutung hat, in an sich bekannter Weise an Polydiene der allgemeinen Formel

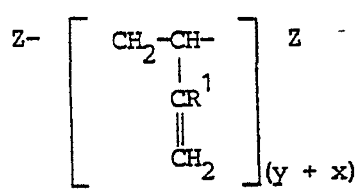

(III)

welche ein Molgewicht von 300 bis 200 000 aufweisen, in Gegenwart von Edelmetallkatalysatoren anlagert und die erhaltenen Anlagerungsprodukte mit Verbindungen der Formel

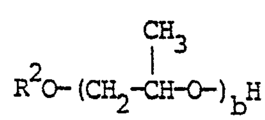

(IV)

in ebenfalls bekannter Weise umsetzt.

Die Verfahrensprodukte entsprechen der Formel

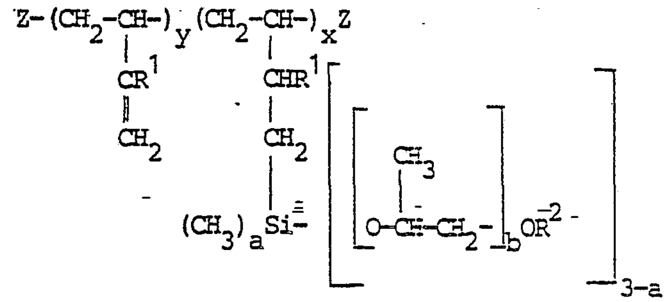

In der Formel bedeutet Z kettenbegrenzende Gruppen, welche durch das gewählte Herstellungsverfahren für das Polydien vorgegeben sind. Beispiele solcher Gruppen sind $-H$, $-CH_2-CH_2-CH=CH_2$, $-CH_2-CH_2-OH$, $-COOH$, $-CH_3$, $-C_4H_9$, $-C_6H_5$, $-CH_2-C_6H_5$, $-Si(CH_3)_3$.

$R^1$ und $R^2$ können im polymeren Molekül jeweils unterschiedliche Bedeutung haben. $R^1$ ist ein Wasserstoff- oder Methylrest. $R^2$ ist ein Alkyl- oder Alkylarylrest mit 4 bis 18 Kohlenstoffatomen, vorzugsweise 8 bis 18 Kohlenstoffatomen, insbesondere 12 bis 18 Kohlenstoffatomen, wobei die Alkylgruppe vorzugsweise verzweigt sein soll. Verzweigte Alkylgruppen mit einem höheren Kohlenstoffgehalt haben den Vorteil, daß die Viskosität der Modifizierungsmittel herabgesetzt wird. Die Alkylreste können auch fluoriert, insbesondere teilweise fluoriert sein. Beispiele solcher fluorierter Reste sind $CF_3-(CF_2-)_6CH_2-$, $CF_3-(CF_2-)_5CH_2-CH_2-$, $CF_3-(CF_2-)_7CH_2-CH_2-$. Der Rest $R^2$ kann auch die Bedeutung eines Pentaerythrittriacrylat- bzw. -trimethacrylatrestes der Formel

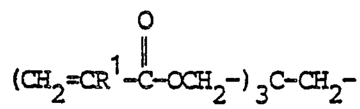

haben. Mindestens 80 % der Gruppen $R^2$ müssen jedoch Alkyl- oder Alkylarylreste sein. Das Ausgangspolydien soll ein Molgewicht von 300 bis 200 000 aufweisen. Hieraus leiten sich die Zahlenwerte für die Indices x und y ab, wobei x mindestens jedoch $\geq 3$ und $y \geq 1$ ist. a hat einen Wert von 0 bis 2, b einen Wert von 0 oder 1. Bevorzugt sind Verbindungen, bei denen b = 1 ist und $R^2$ ein von einem primären Alkohol oder Phenol hergeleiteter Rest ist, da deren Hydrolysestabilität erhöht ist.

Die Gruppe X ist ein Halogen-, Alkoxy- oder Acyloxyrest. Als Alkoxyreste sind insbesondere niedere Alkoxyreste mit 1 bis 4 Kohlenstoffatomen bevorzugt. Als Acyloxyreste sind Reste mit 2 bis 4 Kohlenstoffatomen bevorzugt.

Die als Ausgangsverbindungen verwendeten Polydiene der Formel III können in untergeordnetem Maße Einheiten der Formel $-CH_2-CR^1=CH-CH_2-$ in cis- oder trans-Konfiguration enthalten. Diese Gruppen reagieren jedoch nur ungenügend mit den reaktiven Gruppen der Beschichtungsharze. Sie Sollten deshalb in Mengen von < 20 Mol-% im Polydienmolekül enthalten sein.

Die durch Anlagerung der Silane der Formel II an die Polydiene der Formel III erhaltenen Produkte werden dann mit Verbindungen der Formel IV in ebenfalls bekannter Weise umgesetzt.

Die Durchführung des erfindungsgemäßen Verfahrens läuft analog dem Verfahren, wie es in der DE-PS 23 21 557 beschrieben ist, ab. Als Katalysatoren für die Anlagerung der Silane der Formel II an die Polydiene der Formel III werden insbesondere Platinkatalysatoren, wie z. B. Hexachloroplatinsäure oder Platinethylenpyridindichlorid, verwendet. Die Reaktion wird zweckmäßig in Gegenwart eines Lösungsmittels, insbesondere Toluol, durchgeführt.

Die Anlagerung des Silans an das Polydien erfolgt vorzugsweise bei erhöhten Temperaturen, z. B. beim Siedepunkt des Toluols.

Die Umsetzung der erhaltenen Zwischenprodukte mit den Verbindungen der Formel

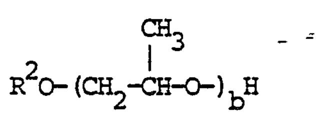 (IV)

erfolgt zweckmäßig ebenfalls in Anwesenheit eines Lösungsmittels, wobei wiederum Toluol bevorzugt ist. Es können jedoch auch andere inerte Lösungsmittel, wie z. B. Methylenchlorid, Glykolether oder cyclische Ether verwendet werden. Hat X die Bedeutung eines Halogenrestes, wird der freigesetzte Halogenwasserstoff zweckmäßig mit Ammoniak abgefangen. Anstelle des Ammoniaks kann auch ein Amin verwendet werden. In ähnlicher Weise kann, wenn X die Bedeutung eines Acyloxyrestes hat, die freigesetzte Carbonsäure neutralisiert werden. Hat X die Bedeutung eines Alkoxyrestes, so empfiehlt es sich, das freigesetzte, niedermolekulare Alkanol aus dem Reaktionsgemisch destillativ zu entfernen. Aus diesem Grunde ist es auch bevorzugt, als Alkoxyrest den Methoxy- oder Ethoxyrest zu verwenden.

Die erfindungsgemäß hergestellten Verfahrensprodukte können nun gemäß einem weiteren Gegenstand der Erfindung abhäsiven Beschichtungsmassen auf Siliconbasis, deren Herstellung in der DE-OS 29 48 708 beschrieben ist, zugesetzt werden. Bedingt durch den Gehalt an mit y bezeichneten Einheiten gelingt der reaktive Einbau der Modifizierungsmittel in die abhäsive Beschichtungsmasse bei

deren Aushärtung. Dabei reagieren die in der Beschichtungsmasse enthaltenen olefinischen Doppelbindungen oder Hydrogensilylgruppen mit der Struktureinheit y. Durch diesen Einbau wird eine permanente Modifizierung der Beschichtungsmittel bewirkt, und es wird insbesondere vermieden, daß die Modifizierungsmittel bei der Lagerung oder beim Gebrauch der Beschichtungsmassen wandern und ausschwitzen. Es werden die abhäsiven Eigenschaften der Beschichtungsmassen verbessert, wobei es genügt, wenn man den Beschichtungsmassen 0,1 bis 10 Gew.-% der Modifizierungsmittel, bezogen auf die Massen, zusetzt ; bevorzugt verwendet man 0,5 bis 5 Gew.-% Beschichtungsmittel, wie sie in der vorgenannten DE-OS 29 48 708 beschrieben sind, lassen sich mit dem angegebenen Gehalt an Modifizierungsmittel in an sich bekannter Weise strahlungshärten, wobei die Modifizierungsmittel reaktiv eingebaut werden.

In den folgenden Beispielen wird das erfindungsgemäße Verfahren näher erläutert, und es wird der Einfluß der Modifizierungsmittel auf Beschichtungsmassen nach dem Stand der Technik gezeigt.

Beispiel 1

54 g Polybutadien mit einem Molekulargewicht von 1 200 und einem Vinylgruppengehalt von > 85 Mol-% werden in der gleichen Menge Toluol gelöst und mit 10,8 mg Platinethylenpyridindichlorid versetzt. Dazu werden bei 100 °C 69 g Methyldichlorsilan getropft und weitere 3 Stunden bei 100 °C gehalten. Anschließend werden in Vakuum bis 80 °C die flüchtigen Verbindungen abdestilliert. Man erhält 119 g einer braunen, hochviskosen Substanz mit einem Säurewert von 9,53 mval Säure/g entsprechend einem Umsatz von 0,57 Butadieneinheiten.

Zu 285,6 g trockenem Isotridecylalkohol, dem 1 Mol Propylenoxid aufgepfropft wurde, wird bei Raumtemperatur die gleiche Menge Toluol gegeben sowie 111 g Triethylamin und 210 g einer 50 % igen Lösung des vorher hergestellten Polybutadien-Methyldichlorsilan-Addukts in Toluol. Die Mischung wird erwärmt und 4 Stunden unter Rückfluß gehalten, dann filtriert, bei 80 °C im Vakuum von flüchtigen Bestandteilen befreit und nochmals filtriert. Man erhält 342 g einer gelblichen Flüssigkeit mit einer Viskosität von 1 491 mPas bei 25 °C, die im Gel-Permeations-Chromatogramm nur geringe Anteile des monomeren Isotridecylalkohol-Propylenoxid-Addukts zeigt und im wesentlichen aus einer hochmolekularen Substanz (Peak-Molekulargewicht (PMG) 6 700, Basis Polystyrol) der im Anspruch angegebenen Formel besteht. Die Formel wird verifiziert durch folgende analytische Daten :

Elementaranalyse :

| | | |
|---|---|---|
| gefunden : | Si 4,0 % | C 74,1 % |
| berechnet : | Si 4,3 % | C 73,6 % |

Charakteristische IR-Banden :

| | | |
|---|---|---|
| Si—O—C | 1 090 $cm^{-1}$ | stark |
| Si—$CH_3$ | 1 255 $cm^{-1}$ | stark |
| Vinyl | 910 $cm^{-1}$ | stark |

Jodzahl : 29

Beispiel 2

Wie in Beispiel 1 werden 54 g eines Polybutadiens mit einem Molekulargewicht von 3 000 und einem Vinylgruppengehalt von > 90 % mit 54,2 g Trichlorsilan und 5,8 mg Platinethylenpyridindichlorid zu 96 g Produkt umgesetzt. Man titriert 9,6 mval Säure/g entsprechend einer Umsetzung von 0,31 Butadieneinheiten.

Man verfährt weiter wie in Beispiel 1, indem man als Alkohol 330,1 g des Propylenoxidaddukts von Isooctadecylalkohol einsetzt. Man erhält 292 g einer beigefarbenen, hochviskosen Substanz, die im Gel-Permeations-Chromatogramm nur geringe Anteile des monomeren Isooctadecylalkohol-Propylenoxid-Addukts zeigt und im wesentlichen aus einer hochmolekularen Substanz (PMG 29 500) der im Anspruch angegebenen Formel besteht. Die Formel wird verifiziert durch folgende analytische Daten :

Elementaranalyse :

| | | |
|---|---|---|
| gefunden : | Si 2,2 % | C 77,2 % |
| berechnet : | Si 2,4 % | C 76,9 % |

Charakteristische IR-Banden :

| | | |
|---|---|---|
| Si—O—C | 1 090 $cm^{-1}$ | stark |

| | | |
|---|---|---|
| Vinyl | 910 $cm^{-1}$ | stark |

Jodzahl : 59

Beispiel 3

54 g des Polybutadiens aus Beispiel 2 werden mit 4,8 mg Platinethylenpyridindichlorid und 37,9 g Methyldichlorsilan umgesetzt. Man titriert 6,6 mval Säure/g entsprechend einer Umsetzung von 0,29 Butadieneinheiten.

Man verfährt weiter wie in Beispiel 1, indem man als Alkoholkomponente 121,3 g eines Gemisches von Isotridecylalkohol und Pentaerythrittriacrylat im Molverhältnis 9 : 1 mit 0,01 g Kupferpulver als Polymerisationsinhibitor einsetzt. Man erhält 147 g einer gelblichen Flüssigkeit mit einer Viskosität von 57 Pas, die im Gel-Permeations-Chromatogramm nur geringe Anteile des monomeren Isotridecylalkohols und Pentaerythrittriacrylats zeigt und im wesentlichen aus einer hochmolekularen Substanz (PMG 13 500) der im Anspruch angegebenen Formel besteht. Die Formel wird verifiziert durch folgende analytische Daten :

Elementaranalyse :

| | | |
|---|---|---|
| gefunden : | Si 4,1 % | C 75,4 % |
| berechnet : | Si 4,3 % | C 75,9 % |

Charakteristische IR-Banden :

| | | |
|---|---|---|
| Si—O—C | 1 090 $cm^{-1}$ | stark |
| Si—$CH_3$ | 1 255 $cm^{-1}$ | stark |
| Vinyl | 910 $cm^{-1}$ | stark |
| Acrylester | 1 730 $cm^{-1}$ | mittel |

Jodzahl : 94

Beispiel 4

Es werden 54 g eines Polybutadiens mit einem Molekulargewicht von 151 000 und > 90 % Vinylgruppengehalt als 10 %ige Lösung in Toluol mit 36,3 mg Platinethylenpyridindichlorid und 57,5 g Methyldichlorsilan 1 Stunde bei 70 °C umgesetzt. Anschließend werden 5 mal je 100 ml Methylenchlorid zugesetzt und bei Normaldruck abdestilliert, um unumgesetztes Methyldichlorsilan zu entfernen. Die erhaltene toluolische Lösung wird zu 5,7 mval Säure/g Festsubstanz titriert, was einer Umsetzung von 0,23 Butadieneinheiten entspricht.

Die weitere Umsetzung erfolgt analog Beispiel 1, wobei als Alkoholkomponente 81,6 g eines Gemisches von 2-Ethylhexanol und Stearylalkohol im Molverhältnis 1 : 1 Verwendung findet. Man erhält 114 g einer farblosen, bei Raumtemperatur festen Substanz, die im Gel-Permeations-Chromatogramm etwa 15 % niedermolekulare Anteile enthält und im übrigen aus einer hochmolekularen Substanz der im Anspruch angegebenen Formel besteht. Die Formel wird verifiziert durch folgende analytische Daten :

Elementaranalyse :

| | | |
|---|---|---|
| gefunden : | Si 4,4 % | C 78,2 % |
| berechnet : | Si 4,6 % | C 77,5 % |

Charakteristische IR-Banden :

| | | |
|---|---|---|
| Si—O—C | 1 090 $cm^{-1}$ | stark |
| Si—$CH_3$ | 1 255 $cm^{-1}$ | stark |
| Vinyl | 910 $cm^{-1}$ | stark |
| $(CH_2) \geqslant 4$ | 720 $cm^{-1}$ | mittel |

Jodzahl : 115

Beispiel 5

105 g eines Polybutadien-Methyldichlorsilan-Addukts aus Beispiel 1 werden mit 411,6 g einer 50 %igen Lösung von Laurylalkohol in Toluol versetzt und 2 Stunden bei 50 °C gerührt. Dann wird Ammoniak bis zur alkalischen Reaktion eingeleitet, im Vakuum eingeengt und filtriert. Man erhält 232 g eines gelblichen Produkts mit einer Viskosität von 2 740 mPas, die im Gel-Permeations-Chromatogramm

nur geringe Anteile des monomeren Laurylalkohols zeigt und im wesentlichen aus einer hochmolekularen Substanz (PMG 6 300) der im Anspruch angegebenen Formel besteht. Die Formel wird verifiziert durch folgende analytische Daten :

Elementaranalyse :

| | | |
|---|---|---|
| gefunden : | Si 5,0 % | C 76,3 % |
| berechnet : | Si 5,5 % | C 75,5 % |

Charakteristische IR-Banden :

| | | |
|---|---|---|
| Si—O—C | 1 090 $cm^{-1}$ | stark |
| $Si—CH_3$ | 1 255 $cm^{-1}$ | stark |
| Vinyl | 910 $cm^{-1}$ | stark |
| $(CH_2) \geqslant 4$ | 720 $cm^{-1}$ | mittel |

Jodzahl : 38

Beispiel 6

54 g Polybutadien des Beispiels 2 werden mit 10,9 mg Platinethylenpyridindichlorid und 67,5 g Dimethylmethoxysilan in Toluol bei 100 °C umgesetzt. Das Produkt hat einen Methoxywert von 18,7 % $OCH_3$, was einer Umsetzung von 0,72 Butadieneinheiten entspricht.

118 g dieser Verbindung werden mit 203,3 g des Isotridecylalkohol-Propylenoxid-Addukts aus Beispiel 1 und der gleichen Menge Toluol soxie 0,4 g Butyltitanat versetzt, 1 Stunde unter Rückfluß erhitzt und dann zunächst bei Normaldruck, später im Vakuum, von flüchtigen Bestandteilen befreit. Man erhält 297 g einer gelblichen, hochviskosen Substanz, die im Gel-Permeations-Chromatogramm nur geringe Anteile des monomeren Isotridecylalkohol-Propylenoxid-Addukts zeigt und im wesentlichen aus einer hochmolekularen Substanz (PMG 15 900) der im Anspruch angegebenen Formel besteht. Die Formel wird verifiziert durch folgende analytische Daten :

Elementaranalyse :

| | | |
|---|---|---|
| gefunden : | Si 6,8 % | C 72,4 % |
| berechnet : | Si 7,2 % | C 72,3 % |

Charakteristische IR-Banden :

| | | |
|---|---|---|
| Si—O—C | 1 090 $cm^{-1}$ | stark |
| $Si—CH_3$ | 1 255 $cm^{-1}$ | stark |
| Vinyl | 910 $cm^{-1}$ | mittel |

Beispiel 7

6,8 g eines Polyisoprens vom Molekulargewicht 36 000 mit mehr als 90 % 3,4-Einheiten, das aus Isopren und Butyllithium hergestellt wurde, werden mit 5,8 g Methyldichlorsilan und 3,9 mg Hexachloroplatinsäure als 20 %ige Lösung in Toluol in einem Druckgefäß abgeschlossen und 8 Stunden auf 70 °C erhitzt. Nach dem Entfernen flüchtiger Bestandteile bei Normaldruck erhält man 11,3 g einer dunklen, hochviskosen Substanz mit einem Säurewert von 6,9 mval Säure/g entsprechend einem Umsatz von 0,39 Isopreneinheiten.

Im weiteren wird nach Beispiel 1 verfahren, wobei als Alkoholkomponente 26,5 g eines Propylenoxidaddukts an Nonylphenol eingesetzt wird. Man erhält 26,7 g einer dunkelgelben, bei Raumtemperatur fast festen Substanz, die im Gel-Permeations-Chromatogramm nur geringe Anteile des monomeren Nonylphenol-Propylenoxid-Addukts zeigt und im wesentlichen aus einer hochmolekularen Substanz der im Anspruch angegebenen Formel besteht. Die Formel wird verifiziert durch folgende analytische Daten :

Elementaranalyse :

| | | |
|---|---|---|
| gefunden : | Si 3,1 % | C 77,9 % |
| berechnet : | Si 3,6 % | C 77,4 % |

Charakteristische IR-Banden :

| | | |
|---|---|---|
| Si—O—C | 1 090 $cm^{-1}$ | stark |
| $Si—CH_3$ | 1 255 $cm^{-1}$ | stark |

| | | |
|---|---|---|
| Methylvinyl | 890 $cm^{-1}$ | stark |
| $(CH_2) \geq 4$ | 720 $cm^{-1}$ | mittel |
| Aromat | 1 510 $cm^{-1}$ | stark |
| Aromat | 1 610 $cm^{-1}$ | mittel |
| Aromat | 1 580 $cm^{-1}$ | schwach |

Prüfung der anwendungstechnischen Eigenschaften

Es werden Mischungen hergestellt aus 98 Gew.-% eines linearen, etwa 40 Si-Atome im Molekül enthaltenden Polydimethylsiloxans mit Pentaerythrittriacrylat-Endgruppen (gemäß DE-OS 29 48 708) und 2 % der erfindungsgemäß hergestellten Modifizierungsmittel. Diese Mischungen werden jeweils mit 6 % Diethoxyacetophenon als Photoinitiator versetzt, mit einer 10 µm-Rakel auf Papier sowie Polypropylenfolie aufgetragen und durch eine Quecksilbermitteldrucklampe (80 W/cm) in ca. 3 Sek. ausgehärtet.

Auf die so gehärtete Beschichtung wird ein 30 mm breites Klebeband durch 10 maliges Walzen mit einer 10 kg schweren Walze aufgebracht und anschließend 16 Stunden bei 70 °C mit einem Druck von 2 $kN/m^2$ belastet. Danach wird das Gewicht entfernt und die Kraft gemessen, die benötigt wird, um das Klebeband unter einem Schälwinkel von 180° mit Geschwindigkeiten von 5 mm/Sek. vom Untergrund abzuziehen. Diese Kraft wird als Trennwert bezeichnet. Der abgezogene Streifen Klebeband wird auf eine gesäuberte und entfettete Glasplatte aufgebracht. Die danach zum Abziehen gemessenen Kräfte werden mit denen verglichen, die man für ein im Trennwert-Test nicht benutztes Klebeband erhält. Der Vergleich gibt die Restklebkraft in % an.

| Modifizierungsmittel nach Beispiel Nr. | Papier Trennwert [N] | Papier Restklebkraft [%] | Folie Trennwert [N] | Folie Restklebkraft [%] |
|---|---|---|---|---|
| 1 | 0,15 | 89 | 0,20 | 86 |
| 2 | 0,25 | 86 | 0,25 | 86 |
| 3 | 0,30 | 90 | 0,30 | 90 |
| 4 | 0,15 | 79 | 0,20 | 81 |
| 5 | 0,20 | 86 | 0,25 | 90 |
| 6 | 0,20 | 81 | 0,30 | 81 |
| 7 | 0,25 | 79 | 0,25 | 81 |
| Vergleich ohne Zusatz | 1,25 | 93 | 1,35 | 93 |
| Vergleich Zusatz DE-AS 26 02 809 Beispiel 1 | 0,20 | 53 | 0,25 | 58 |

**Patentansprüche**

1. Organosiliciummodifizierte Polydiene der allgemeinen Formel

(Siehe Schema, Seite 9 f.)

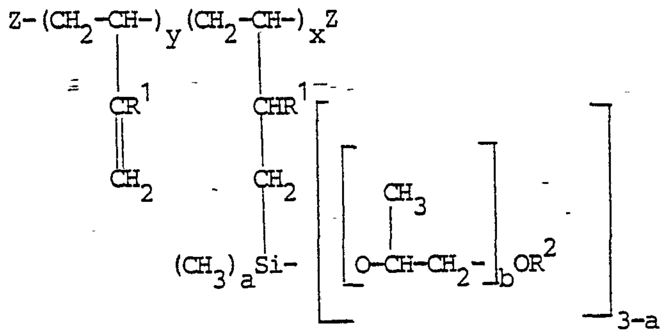

worin Z kettenbegrenzende Gruppen bedeutet,

$R^1$ im polymeren Molekül gleich oder verschieden ist und einen Wasserstoff- oder Methylrest bedeutet,

$R^2$ im polymeren Molekül gleich oder verschieden ist und einen, gegebenenfalls fluorierten, Alkyl- oder Alkylarylrest mit 6 bis 18 Kohlenstoffatomen oder den Rest

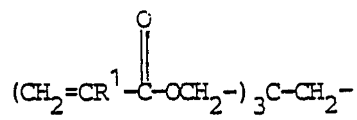 ,

jedoch mindestens 80 % der Reste $R^2$ Alkyl- oder Alkylarylreste sind, bedeutet,

$x \geq 3$ und

$y \geq 1$ ist, beide Indices jedoch so groß sind, daß das Molgewicht des gerüstbildenden Polydiens 300 bis 200 000 ist,

a = 0 bis 2

b = 0 oder 1 ist,

und wobei die Polydiene ggf. weniger als 20 Mol% der Einheiten $-CH_2-CR^1=CH-CH_2-$ enthalten.

2. Verfahren zur Herstellung von organosiliciummodifizierten Polydienen nach Anspruch 1, dadurch gekennzeichnet, daß man Silane der allgemeinen Formel

$$(CH_3)_aSiHX_{3-a}$$

wobei X ein Halogen-, Alkoxy- oder Acyloxyrest ist und a die angegebene Bedeutung hat, in an sich bekannter Weise an Polydiene der allgemeinen Formel

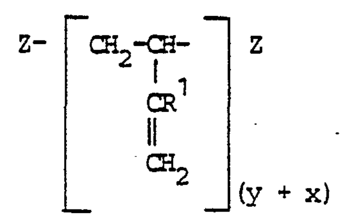

welche ein Molgewicht von 300 bis 200 000 aufweisen, in Gegenwart von Edelmetallkatalysatoren anlagert und die erhaltenen Anlagerungsprodukte mit Verbindungen der Formel

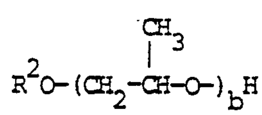

in ebenfalls bekannter Weise umsetzt.

3. Verwendung der Verbindungen des Anspruchs 1 als reaktive Modifizierungsmittel für abhäsive Beschichtungsmassen auf der Basis von polymeren Siliconverbindungen, welche Reste mit olefinischen Doppelbindungen oder Hydrogensilylreste aufweisen.

**Claims**

1. Organosilicon-modified polydienes of the general formula

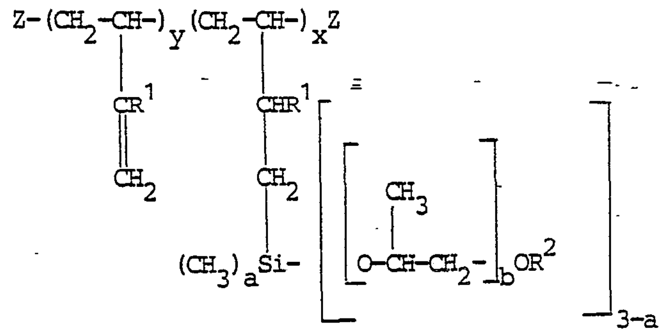

wherein Z represents chain-stopping groups,

$R^1$ in the polymeric molecule is identical or different and represents a hydrogen or methyl radical,

$R^2$ in the polymeric molecule is identical or different and represents an optionally fluorinated alkyl or alkylaryl radical having 6 to 18 carbon atoms or the radical

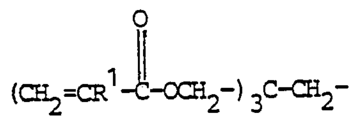 ,

but at least 80 % of the radicals $R^2$ being alkyl or alkylaryl radicals,

x is $> 3$ and

y is $> 1$, but both indices being of such magnitude that the molecular weight of the skeleton-forming polydiene is 300 to 200 000,

a is 0 to 2 and

b is 0 or 1,

the polydienes optionally containing less than 20 mol% of the $-CH_2-CR^1=CH-CH_2-$ units.

2. Process for the preparation of organosiliconmodified polydienes according to Claim 1, characterized in that silanes of the general formula

$$(CH_3)_aSiHX_{3-a}$$

wherein X is a halogen, alkoxy or acyloxy radical and a has the meaning indicated, are added in the presence of rare metal catalysts in a manner known per se to polydienes of the general formula

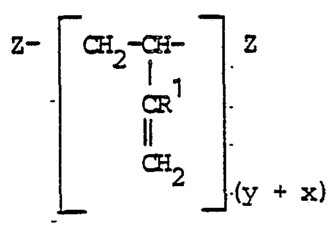

which have a molecular weight of 300 to 200 000, and the adducts obtained are reacted with compounds of the formula

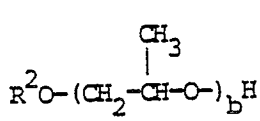

likewise in a known manner.

3. Use of the compounds of Claim 1 as reactive modifiers for non-stick coating compositions based on polymeric silicone compounds which contain radicals with olefinic double bonds or hydrogen-silyl radicals.

**Revendications**

1. Polydiènes modifiés par un composé organique du silicium, de formule générale

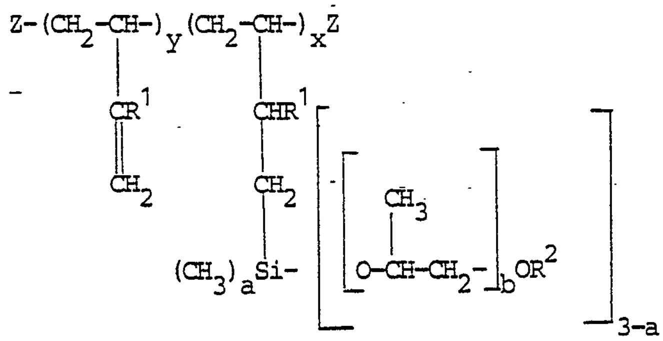

dans laquelle Z représente des groupes terminaux de chaîne,

les radicaux $R^1$, dans la molécule polymère, peuvent être identiques ou différents et représentent chacun un radical hydrogène ou méthyle,

les radicaux $R^2$, dans la molécule polymère, sont identiques ou différents, et représentent chacun un radical alkyle ou alkylaryle éventuellement fluoré, ayant de 6 à 18 atomes de carbone, ou le radical

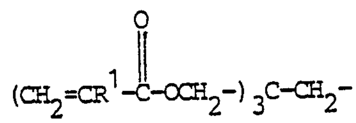 ,

mais au moins 80 % des radicaux $R^2$ étant des radicaux alkyle ou alkylaryle,

$x \geqslant 3$ et

$y \geqslant 1$, ces deux indices devant cependant être suffisamment élevés pour que la masse moléculaire du polydiène formant l'ossature soit de 300 à 200 000,

$a = 0$ à 2

$b = 0$ ou 1,

et où les polymères contiennent éventuellement moins de 20 % en moles des motifs $—CH_2—CR^1{=}CH—CH_2—$.

2. Procédé pour la préparation de polydiènes modifiés par un composé organique du silicium selon la revendication 1, caractérisé en ce qu'on fixe en présence de catalyseurs à base de métaux nobles des silanes de formule générale

$$(CH_3)_aSiHX_{3-a}$$

dans laquelle X est un radical halogène, alcoxy ou acyloxy, et a a la signification indiquée, d'une manière connue en soi, sur des polydiènes de formule générale

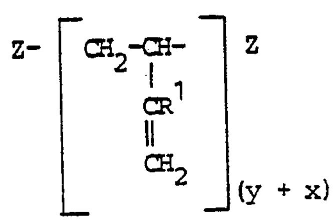

qui ont une masse moléculaire de 300 à 200 000, et qu'on fait réagir, toujours d'une manière connue, les produits d'addition obtenus sur des composés de formule

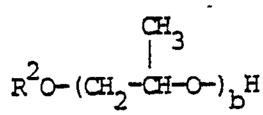

3. Utilisation des composés selon la revendication 1 en tant que modifiants réactifs pour des compositions de revêtement anti-adhésives à base de composés siliconés polymères, qui contiennent des radicaux ayant des doubles liaisons oléfiniques, ou des radicaux hydrogénosilyle.